# EUROPÄISCHE PATENTSCHRIFT

(11) **EP 2 619 044 B1**
(45) Veröffentlichungstag und Bekanntmachung des Hinweises auf die Patenterteilung: **04.03.2015**
(21) Anmeldenummer: 12780118.1
(22) Anmeldetag: 10.10.2012
(51) Int. Cl.: B60S 9/02

(54) **STÜTZFUSS UND STÜTZVORRICHTUNG FÜR EINEN SATTELANHÄNGER, MIT EINEM DÄMPFUNGSELEMENT ZUR VERMEIDUNG VON KLAPPERGERÄUSCHEN**
SUPPORT FOOT AND SUPPORT DEVICE FOR A SEMI-TRAILER, HAVING A DAMPING ELEMENT FOR THE PREVENTION OF RATTLING NOISES
PIED DE SUPPORT ET DISPOSITIF DE SUPPORT POUR UN SEMI-REMORQUE AVEC UN ÉLÉMENT DE COMPENSATION POUR EMPÊCHER LES BRUITS DE CLIQUÈTEMENT

(30) Priorität: 14.10.2011 DE 102011084488
(43) Veröffentlichungstag der Anmeldung: 31.07.2013
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2012/069985
(87) Internationale Veröffentlichungsnummer: WO 2013/053721

(56) Entgegenhaltungen:
- DE-A1- 3 642 079
- DE-A1-102009 001 299
- US-A- 3 881 692
- US-A- 4 015 825
- US-A- 4 462 612
- US-B1- 6 802 535

## Beschreibung

Die Erfindung betrifft einen Stützfuß für eine Stützvorrichtung zur Abstützung eines Sattelanhängers bzw. Sattelaufliegers oder dergleichen, wobei dieser Stützfuß ein Ausgleichselement, wie ein Abrollsegment, und eine Aufstandsplatte, auf der das Ausgleichselement im Stützbetrieb abrollen kann, aufweist. Die Erfindung betrifft ferner auch eine Stützvorrichtung für einen Sattelanhänger oder dergleichen, mit einem solchen Stützfuß.

Stützvorrichtungen sind meist paarweise (so genanntes Stützenpaar) im vorderen Rahmenbereich eines Sattelanhängers angeordnet und kommen dann zum Einsatz, wenn der Sattelanhänger von der Sattelzugmaschine abgekoppelt und getrennt abgestellt werden soll. Zum Stand der Technik wird auf die Patentschriften DE 10 2009 001 288 A1 und DE 10 2009 001 299 A1 derselben Anmelderin verwiesen.

Die DE 36 42 079 A1 betrifft eine höhenverstellbare Stütze für Sattelanhänger, die mittels einer Handkurbel betätigbar ist, wobei am unteren Ende des ausfahrbaren Stützenteils ein um eine horizontale Achse schwenkbares Lagerteil für eine Fußplatte vorgesehen ist.

Die DE 10 2009 001 299 A1 betrifft einen Stützfuß für einen Sattelanhänger, bei welchem am unteren Ende einer ausfahrbaren Stützeneinheit ein schwenkbarer Stützfuß vorgesehen ist, der ausgelegt ist, einen Versatz der Position des Fahrzeugs auszugleichen.

Die US-4,462,612 betrifft einen Stützfuß zur Abstützung eines Sattelanhängers mit zwei ineinander verschiebbaren Stützenrohren.

Die vorbekannten Stützvorrichtungen weisen ein zumeist mehrteiliges und insbesondere teleskopierbares Stützrohr auf, an dessen unterem Ende ein Stützfuß angeordnet ist. Die Stützfüße der vorbekannten Stützvorrichtungen umfassen ein direkt oder indirekt am Stützrohr befestigtes Abrollsegment bzw. Ausgleichssegment bzw. -element und eine Aufstandsplatte (Fußelement bzw. Fußplatte) mit einem Abrollbereich für das Ausgleichselement, so dass sich der Sattelanhänger im abgekoppelten Zustand bzw. im Stützbetrieb vorwärts oder rückwärts bewegen kann, ohne dass es zu einer übermäßigen Biege- und/oder Knickbeanspruchung der Stützvorrichtungen kommt.

An den vorbekannten Stützfüßen können im Fahrbetrieb Klappergeräusche bzw. Schlaggeräusche und dergleichen auftreten, was unerwünscht ist.

Es ist daher eine Aufgabe der vorliegenden Erfindung, einen Stützfuß der eingangs genannten Art anzugeben, an dem im Fahrbetrieb keine Klappergeräusche auftreten.

Diese Aufgabe wird durch einen Stützfuß mit den Merkmalen des Anspruchs 1 gelöst. Die abhängigen Ansprüche sowie die Beschreibung betreffen bevorzugte Ausgestaltungen und Weiterbildungen des erfindungsgemäßen Stützfußes.

Erfindungsgemäß ist ein Stützfuß für eine Stützvorrichtung zur Abstützung eines Sattelanhängers oder dergleichen vorgesehen, umfassend ein Ausgleichselement und eine Aufstandsplatte, auf der sich das Ausgleichselement im Stützbetrieb verlagern kann, wobei zwischen dem Ausgleichselement und der Aufstandsplatte ein Dämpfungselement angeordnet ist, um im Fahrbetrieb auftretende Klappergeräusche zu verhindern. Der erfindungsgemäße Stützfuß weist wenigstens ein zwischen dem Ausgleichselement und der Aufstandsplatte wirksames Dämpfungselement auf, welches ausgelegt ist, im Fahrbetrieb das Auftreten von Klappergeräuschen zu verhindern. Der Erfindung liegt die Erkenntnis zugrunde, dass die Klappergeräusche im Fahrbetrieb ursächlich entstehen, indem die Aufstandsplatte gegen das Ausgleichselement schlägt oder umgekehrt, was zu wahrnehmbaren metallischen Schlaggeräuschen führt. Somit wird hierin unter einem Dämpfungselement ein Bauelement verstanden, durch welches im Fahrbetrieb ein direktes Kontaktieren oder mechanisches Aneinanderschlagen von Aufstandsplatte und Ausgleichselement im Wesentlichen verhindert wird oder soweit abgeschwächt wird, dass keine störenden Klappergeräusche mehr wahrnehmbar sind. Das Dämpfungselement hat somit zweckmäßigerweise sowohl eine mechanische als auch eine akustische Wirkung. Besonders vorteilhaft ist, dass das Dämpfungselement seine Funktion unabhängig von der Position des Stützfußes im Fahrbetrieb erfüllt.

So kann das Dämpfungselement derart ausgebildet und/oder angeordnet sein, dass das Dämpfungselement unabhängig von der Position bzw. Lage bzw. Auslenkung des Ausgleichselements zwischen dem Ausgleichselement und der Aufstandsplatte wirksam ist.

Bevorzugt ist jedoch vorgesehen, dass das Dämpfungselement derart ausgebildet und/oder angeordnet ist, dass das Auftreten von Klappergeräusche nur dann verhindert wird bzw. das Dämpfungselement wirksam ist, wenn sich das Ausgleichselement und die Aufstandsplatte in einer neutralen Position zueinander befinden. Aus dem eingangs benannten Stand der Technik sind Federeinrichtungen bekannt, die gewährleisten, dass das Ausgleichselement und die Aufstandsplatte selbsttätig eine neutrale Position (Nulllage) zueinander einnehmen, wenn sich der Stützfuß nicht im Stützbetrieb befindet. Zum Verhindern von Klappergeräuschen im Fahrbetrieb kann es daher ausreichend sein, dass das Dämpfungselement lediglich dann seine Funktion erfüllt, wenn sich das Ausgleichselement und die Aufstandsplatte in dieser neutralen Position befinden, gegebenenfalls zuzüglich eines kleinen Lage- und/oder Winkel-Toleranzbereichs von zweckmäßigerweise kleiner dem 0,1-fachen der maximalen Auslenkung des Ausgleichselements.

Erfindungsgemäß ist das Dämpfungselement derart ausgebildet und/oder angeordnet, dass im Fahrbetrieb das Ausgleichselement von der Aufstandsplatte beabstandet ist bzw. wird. In anderen Worten kontaktieren das Ausgleichselement und die Aufstandsplatte, insbesondere deren Verlagerungs- bzw. Abrollbereich, im Fahrbetrieb nicht. Das Dämpfungselement kann vorzugsweise derart ausgebildet und/oder angeordnet sein, dass im Stützbetrieb hingegen das Ausgleichselement und die Aufstandsplatte, insbesondere deren Verlagerungs- bzw. Abrollbereich, kontaktieren.

Nach einer bevorzugten Ausgestaltung ist vorgesehen, dass das Dämpfungselement direkt zwischen dem Ausgleichselement und der Aufstandsplatte angeordnet ist und im Fahrbetrieb eine Beabstandung zwischen Ausgleichselement und Aufstandsplatte herbeiführt.

Besonders bevorzugt ist vorgesehen, dass der Dämpfungskörper in einem Aufnahmeraum, wie einer Kammer, Aussparung, Nut oder dergleichen angeordnet ist, wobei dieser Aufnahmeraum in Form und Volumen derart ausgebildet ist, dass der Dämpfungskörper im Stützbetrieb vollständig darin aufgenommen werden kann, damit das Ausgleichselement ungehindert auf der Aufstandsplatte abrollen kann. Der Aufnahmeraum kann am Ausgleichselement und/oder an der Aufstandsplatte angeordnet sein. Im Stützbetrieb ist die auf den Dämpfungskörper wirkende Stützlast so groß, dass der ansonsten aus dem Aufnahmeraum herausragende bzw. überstehende Dämpfungskörper vollständig in dem Aufnahmeraum hinein verformt wird, was in der Folge einen direkten Kontakt zwischen dem Ausgleichselement und der Aufstandsplatte ermöglicht. Beim Beenden des Stützbetriebs, was bspw. durch Anheben des Stützfußes erfolgt, also bspw. im Fahrbetrieb, kann sich der Dämpfungskörper zurückverformen und eine Beabstandung zwischen dem Ausgleichselement und der Aufstandsplatte herstellen, wodurch dann im Fahrbetrieb Klappergeräusche verhindert werden.

Das Dämpfungselement ist insbesondere rückstellfähig und/oder elastisch ausgebildet. Vorteilhafterweise kann das Dämpfungselement ein formstabiler Dämpfungskörper sein, der aus einem rückstellfähigen oder elastischen Material, wie insbesondere einem gummielastischen Material (bspw. einem Hartgummimaterial, einem synthetischen Gummimaterial oder einem elastischen Verbundmaterial), gebildet ist. Ebenso kann das Dämpfungselement ein mit Gel, Öl oder dergleichen gefüllter Dämpfungskörper (Gelpad oder Öldämpfer) sein. Auch Kombinationen derselben sind möglich. Der Dämpfungskörper kann direkt oder indirekt mit dem Ausgleichselement und/oder mit der Aufstandsplatte verklebt sein, wozu dieser insbesondere eine entsprechend ausgebildete Klebeverbindungsfläche aufweist. Ist der Dämpfungskörper bspw. als zylindrischer Körper ausgebildet, so kann dieser im Mantelbereich eine als Klebeverbindungsfläche geeignete Abflachung aufweisen.

Eine zusätzliche oder alternative Ausgestaltung sieht vor, dass das Dämpfungselement eine Federeinrichtung ist, die im Fahrbetrieb eine konstruktiv vorgesehene Beabstandung zwischen dem Ausgleichselement und der Aufstandsplatte herbeiführt, um Klappergeräusche und dergleichen zu vermeiden. Die Federeinrichtung kann am Ausgleichselement angeordnet sein und gegen die Aufstandsplatte wirken (bspw. durch Aufbringen einer Druckkraft). Die Federeinrichtung kann aber auch an der Aufstandsplatte angeordnet sein und gegen das Ausgleichselement wirken. Bei der Federeinrichtung handelt es sich z. B. um eine Blattfeder, wie nachfolgend im Zusammenhang mit den Figuren näher erläutert.

Mit dem nebengeordneten Anspruch erstreckt sich die Lösung der Aufgabe auch auf eine Stützvorrichtung für einen Sattelanhänger oder dergleichen, die ein Stützrohr und einen vorzugsweise am unteren Ende dieses Stützrohrs befestigten erfindungsgemäßen Stützfuß aufweist. Insbesondere handelt es sich bei dem Stützrohr um ein telekopierbares Stützrohr, wobei der erfindungsgemäße Stützfuß am unteren Ende eines teleskopierbaren Innenstützrohrs angeordnet ist. Für diese Stützvorrichtung gelten analog die vorausgehenden und/oder nachfolgenden Erläuterungen.

Die Erfindung wird nachfolgend anhand der schematischen Figuren beispielhaft und in nicht einschränkender Weise näher erläutert, wobei Merkmale einzelner Ausführungsformen zu neuen Ausführungsformen kombiniert werden können.
- Fig. 1: zeigt in einer Seitenansicht einen erfindungsgemäßen Stützfuß in einer bevorzugten Ausgestaltung.
- Fig. 2: zeigt jeweils in einer Schnittansicht zwei Ausführungsmöglichkeiten für den Stützfuß aus Fig. 1.
- Fig. 3: zeigt in einer Seitenansicht einen erfindungsgemäßen Stützfuß in einer anderen bevorzugten Ausgestaltung.
- Fig. 4: zeigt in einer Seitenansicht einen erfindungsgemäßen Stützfuß in einer weiteren bevorzugten Ausgestaltung.

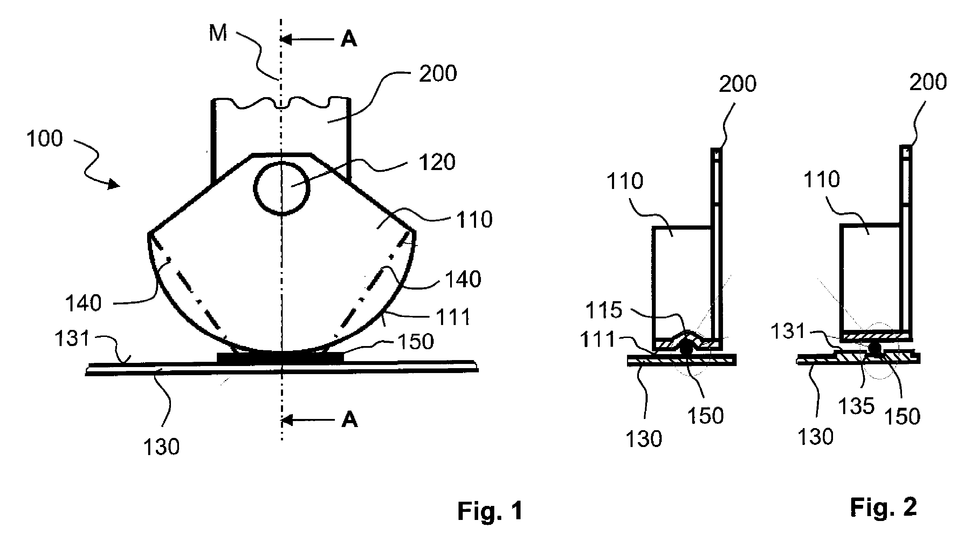

Fig. 1 zeigt einen Stützfuß 100 für eine Stützvorrichtung zur Abstützung eines Sattelanhängers. Der Stützfuß 100 umfasst ein Abrollsegment bzw. Ausgleichselement 110 mit einer bogenförmigen Abrollfläche 111 und eine Aufstandsplatte 130 mit einem Verlagerungs- bzw. Abrollbereich 131, auf dem das Abrollsegment 110 im dargestellten Stützbetrieb verlagern, z. B. abrollen kann und sich hierbei gemäß Darstellung relativ zur Aufstandsplatte 130 nach rechts oder nach links bewegt. Der Stützfuß 100 ist an einem Schwenkgelenk 120 mit einem zur Stützvorrichtung gehörenden Stützrohr 200 verbunden. Über das Schwenkgelenk 120 wird auch die Verschwenkbarkeit des Abrollsegments 110 bewerkstelligt, damit dieses auf der ortsfesten Aufstandsplatte 130 abrollen kann. Mit 140 sind zwei Federeinrichtungen bezeichnet, die dafür sorgen, dass das Abrollsegment 110 und die Aufstandsplatte 130 selbsttätig eine neutrale Position (Nulllage) zueinander einnehmen, wenn sich der Stützfuß 100 nicht im Stützbetrieb befindet.

Erfindungsgemäß ist zwischen dem Abrollsegment 110 und der Aufstandsplatte 130 ein Dämpfungselement angeordnet, wobei es sich um einen formstabilen Dämpfungskörper 150 aus einem elastischen Material, wie insbesondere einem Gummimaterial, handelt. Der Dämpfungskörper 150 verhindert im Fahrbetrieb das Auftreten von Klappergeräuschen, indem dieser das Aneinanderschlagen von Abrollsegment 110 und Aufstandsplatte 130 unterbindet. Der Dämpfungskörper 150 erstreckt sich, wie gezeigt, nicht über die gesamte mögliche Abrolllänge des Abrollsegments 110, sondern deckt nur den Bereich ab, innerhalb dessen sich das Abrollsegment 110 und die Aufstandsplatte 130 in der gezeigten neutralen Position zueinander befinden. Ausgehend von der dargestellten Mittellinie M kann sich der Dämpfungskörper 150 bspw. um 20 mm bis 30 mm in beide Richtungen (+/- 20 mm bis 30 mm) erstrecken.

Wie aus den Schnittansichten in Fig. 2 (gemäß dem in Fig.1 mit A-A angegebenen Schnittverlauf) ersichtlich, weist der Dämpfungskörper 150 eine zylindrische Form auf, wobei der gezeigte Kreisquerschnitt nur beispielhaft ist. Bei der in der linken Figur gezeigten Ausführungsmöglichkeit ist der Dämpfungskörper 150 in einer am Abrollsegment 110 ausgebildeten kammerartigen Vertiefung bzw. Nut 115 angeordnet. Die kammerartige Vertiefung 115 ist direkt in der bogenförmigen Abrollfläche 111 des Abrollsegments 110 ausgebildet. Bei der in der rechten Figur gezeigten Ausführungsmöglichkeit ist der Dämpfungskörper 150 in einer an der Aufstandsplatte 130 ausgebildeten kammerartigen Vertiefung 135 angeordnet. Die kammerartige Vertiefung 135 ist direkt im Abrollbereich 131 der Aufstandsplatte 130 ausgebildet. Ferner ist denkbar, derartige kammerartige Vertiefungen sowohl am Abrollsegment 110 als auch an der Aufstandsplatte 130 vorzusehen.

Die kammerartigen Vertiefungen 115 und 135 sind derart ausgebildet, dass der Dämpfungskörper 150 im Stützbetrieb vollständig darin aufgenommen werden kann, sofern der Dämpfungskörper 150 entsprechend dimensioniert ist. Aufgrund der im Stützbetrieb auf den Dämpfungskörper 150 wirkenden Stützlast wird dieser durch elastische Verformung vollständig in die zugehörige kammerartige Vertiefung 115 bzw. 135 hinein verformt, was in der Folge einen direkten Berührungskontakt zwischen dem Abrollsegment 110 und der Aufstandsplatte 130 bzw. zwischen der bogenförmigen Abrollfläche 111 und dem Abrollbereich 131 ermöglicht, so dass das Abrollsegment 110 ungehindert auf der Aufstandsplatte 130 abrollen kann. Nach Wegfall der Stützlast und/oder beim Beenden des Stützbetriebs durch Anheben des Stützfußes 100 kann sich der elastisch verformte Dämpfungskörper 150 zurückverformen und eine Beabstandung zwischen dem Abrollsegment 110 und der Aufstandsplatte 130 herstellen, wodurch dann im Fahrbetrieb Klappergeräusche verhindert werden. Der Dämpfungskörper 150 muss jedoch ausreichend steif sein, damit dieser die im Fahrbetrieb auftretenden Stoßenergien absorbieren kann, ohne dass das Abrollsegment 110 und die Aufstandsplatte 130 aneinander schlagen.

Die Befestigung des Dämpfungskörpers 150 erfolgt durch Verkleben mit der Aufstandsplatte 130 oder gegebenenfalls auch durch Verkleben mit dem Abrollsegment 110. Der zylindrische Dämpfungskörper 150 kann eine nicht gezeigte Abflachung aufweisen, die als Klebeverbindungsfläche dient. Anstelle einer Verklebung sind auch andere Befestigungsmöglichkeiten, wie bspw. eine Befestigung mittels Nieten, denkbar.

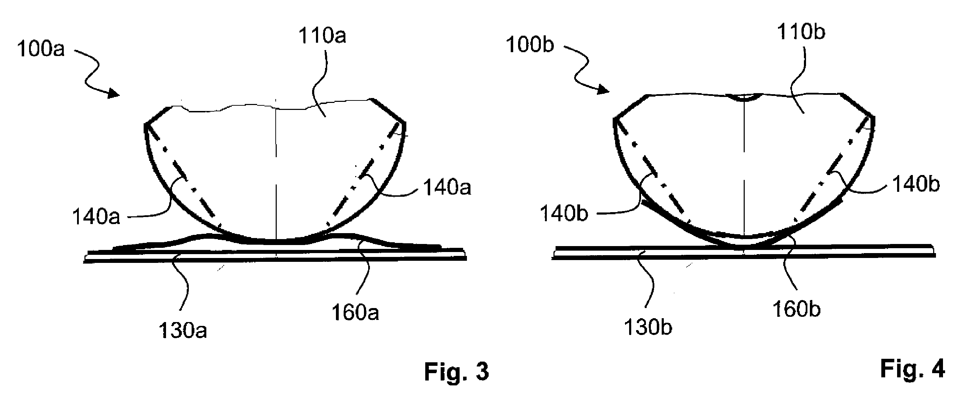

Fig. 3 zeigt einen Stützfuß 100a, mit einem zwischen dem Abrollsegment 110a und der Aufstandsplatte 130a wirksamen Dämpfungselement in Gestalt einer Federeinrichtung 160a. Wenn sich der Stützfuß 100a nicht im Stützbetrieb befindet, führt die beispielhaft als gebogene Blattfeder ausgebildete Federeinrichtung 160a eine ermöglichte Beabstandung zwischen dem Abrollsegment 110a und der Aufstandsplatte 130a herbei, wodurch dann im Fahrbetrieb Klappergeräusche verhindert werden. Im Stützbetrieb wird die Federeinrichtung 160a durch die einwirkende Stützlast elastisch verformt, was in der Folge einen direkten Berührungskontakt zwischen dem Abrollsegment 110a und der Aufstandsplatte 130a ermöglicht. Die Federeinrichtung 160a kann aus einem Metall- ,Kunststoff- oder Verbundmaterial gebildet sein. Insbesondere ist die Federeinrichtung 160a aus einem Federstahl- und/oder Edelstahlmaterial gebildet. So wie der Dämpfungskörper 150 (siehe Fig. 2) kann auch die Federeinrichtung 160a in einer kammerartigen Vertiefung angeordnet sein, wozu auf die vorausgehenden Erläuterungen verwiesen wird, die analog für die Federeinrichtung 160a gelten.

Bei dem in Fig. 3 gezeigten Stützfuß 100a ist die Federeinrichtung 160a an der Aufstandsplatte 130a befestigt (und/oder daran abgestützt) und übt eine Druckkraft gegen das Abrollsegment 110a aus, die im Stützbetrieb durch die Stützlast überwunden wird. Fig. 4 zeigt einen Stützfuß 100b, der ebenfalls eine zwischen dem Abrollsegment 110b und der Aufstandsplatte 130b wirksame Federeinrichtung 160b aufweist, wobei die Federeinrichtung 160b am Abrollsegment 110b befestigt ist (und/oder daran abgestützt ist) und eine Druckkraft gegen die Aufstandsplatte 130b ausübt. Im Übrigen gelten analog die vorausgehenden Erläuterungen.

Die in den Figuren 1 bis 4 gezeigten und/oder vorausgehend erläuterten Ausgestaltungen und Ausführungsmöglichkeiten können im Rahmen der Erfindung auch miteinander kombiniert werden. Ferner können die Stützfüße 100, 100a und 100b mehrere Dämpfungselemente in Gestalt von Dämpfungskörpern 150 und/oder Federeinrichtungen 160a/160b aufweisen.

## Patentansprüche

1. Stützfuß (100) für eine Stützvorrichtung zur Abstützung eines Sattelanhängers oder dergleichen, umfassend
ein Ausgleichselement (110) und eine Aufstandsplatte (130), auf der sich das Ausgleichselement (110) im Stützbetrieb verlagern kann,
wobei zwischen dem Ausgleichselement (110) und der Aufstandsplatte (130) ein Dämpfungselement angeordnet ist, welches ausgelegt ist, im Fahrbetrieb auftretende Klappergeräusche zu verhindern, und
**dadurch gekennzeichnet, dass** das Dämpfungselement derart ausgebildet und/oder angeordnet ist, dass ein Verlagerungs- bzw. Abrollbereich (131) der Aufstandsplatte (130) das Ausgleichselement (110) im Stützbetrieb kontaktiert und im Fahrbetrieb nicht kontaktiert.

2. Stützfuß (100) nach Anspruch 1, wobei das Dämpfungselement direkt zwischen dem Ausgleichselement (110) und der Aufstandsplatte (130) angeordnet ist.

3. Stützfuß (100) nach einem der vorhergehenden Ansprüche, wobei das Dämpfungselement derart ausgebildet und/oder angeordnet, dass im Fahrbetrieb das Ausgleichselement (110) von der Aufstandsplatte (130) beabstandet ist bzw. wird.

4. Stützfuß (100) nach einem der vorhergehenden Ansprüche, wobei zwischen dem Ausgleichselement (110) und der Aufstandsplatte (130) ein Aufnahmeraum (115, 135) ausgebildet ist, in dem das Dämpfungselement angeordnet ist, und
wobei der Aufnahmeraum (115, 135) in Form und Volumen derart ausgebildet ist, dass das Dämpfungselement im Stützbetrieb vollständig darin aufgenommen werden kann.

5. Stützfuß (100) nach einem der vorhergehenden Ansprüche, wobei das Dämpfungselement derart ausgebildet und/oder angeordnet ist, dass das Auftreten von Klappergeräusche nur dann verhindert wird, wenn sich das Ausgleichselement (110) und die Aufstandsplatte (130) in einer neutralen Position zueinander befinden.

6. Stützfuß (100) nach einem der vorhergehenden Ansprüche, wobei das Dämpfungselement einen aus einem rückstellfähigen und/oder elastischen Material und insbesondere aus einem Gummimaterial ausgebildeten formstabilen Dämpfungskörper (150) aufweist.

7. Stützfuß (100a, 100b) nach einem der vorhergehenden Ansprüche, wobei das Dämpfungselement eine Federeinrichtung (160a, 160b) aufweist, die zweckmäßigerweise im Fahrbetrieb eine vorgesehene Beabstandung zwischen dem Ausgleichselement (110a, 110b) und der Aufstandsplatte (130a, 130b) herbeiführt, um im Fahrbetrieb auftretende Klappergeräusche zu verhindern.

8. Stützfuß (100) nach einem der vorhergehenden Ansprüche, wobei das Dämpfungselement einen mit Gel gefüllten Dämpfungskörper aufweist.

9. Stützfuß nach einem der vorhergehenden Ansprüche, wobei das Dämpfungselement direkt oder indirekt mit dem Ausgleichselement (110) und/oder mit der Aufstandsplatte (130) verbunden, insbesondere verklebt ist, wozu dieses vorzugsweise eine entsprechend ausgebildete Klebeverbindungsfläche aufweist.

10. Stützvorrichtung für einen Sattelanhänger oder dergleichen, mit einem Stützrohr (200), insbesondere mit einem teleskopierbaren Stützrohr, und mit einem an diesem Stützrohr befestigten Stützfuß (100), wobei dieser Stützfuß (100) gemäß einem der vorausgehenden Ansprüche ausgebildet ist.

## Claims

1. Support foot (100) for a support device for supporting a semi-trailer or the like, comprising
a compensation element (110) and a contact plate (130), on which the compensation element (110) may displace during the supporting operation,
wherein a damping element is arranged between the compensation element (110) and the contact plate (130), which damping element is adapted to prevent rattling noises during travel, and **characterized in that** the damping element is adapted and/or arranged such that a displacement or rolling area (131) of the contact plate (130) contacts the compensation element (110) during the support operation and does not contact it during travel.

2. The support foot (100) of claim 1, wherein the damping element is arranged directly between the compensation element (110) and the contact plate (130).

3. The support foot (100) of any one of the preceding claims, wherein the damping element is adapted and/or arranged such that during travel the compensation element (110) is or becomes spaced apart from the contact plate (130).

4. The support foot (100) of any one of the preceding claims, wherein, between the compensation element (110) and the contact plate (130), there is formed a receptacle (115, 135), in which the damping element is arranged, and wherein the shape and volume of the receptacle (115, 135) is such that the damping element may be completely accommodated therein during the support operation.

5. The support foot (100) of any one of the preceding claims, wherein the damping element is adapted and/or arranged such that rattling noises are prevented only in case the compensation element (110) and the contact plate (130) are in a neutral position relative to each other.

6. The support foot (100) of any one of the preceding claims, wherein the damping element is made of a resilient and/or elastic material and in particular of a dimensionally stable damping body (150) made of a rubber material.

7. The support foot (100a, 100b) of any one of the preceding claims, wherein the damping element has a spring device (160a, 160b), which expediently during travel provides that the compensation element (110a, 110b) and the contact plate (130a, 130b) are spaced apart so that rattling noises are prevented during travel.

8. The support foot (100) of any one of the preceding claims, wherein the damping element has a gel-filled damping body.

9. The support foot of any one of the preceding claims, wherein the damping element is directly or indirectly connected to the compensation element (110) and/or to the contact plate (130), in particular glued thereto, to which end it preferably has an accordingly adapted adhesive joint surface.

10. A support device for a semi-trailer or the like, with a support pipe (200), in particular a telescopic support pipe, and with a support foot (100) attached to said support pipe, wherein said support foot (100) is formed according to any one of the preceding claims.

## Revendications

1. Pied de support (100) pour un dispositif de support destiné à supporter une remorque de semi-remorque ou similaire, comprenant
un élément de compensation (110) et une plaque d'appui (130) sur laquelle l'élément de compensation (110) peut se déplacer lors du fonctionnement en support, dans lequel un élément d'amortissement est agencé entre l'élément de compensation (110) et la plaque d'appui (130), ledit élément d'amortissement étant conçu pour empêcher les bruits de claquement qui se produisent lors du fonctionnement en circulation,
**caractérisé en ce que**
l'élément d'amortissement est réalisé et/ou agencé de telle façon qu'une zone de déplacement ou de roulement (131) de la plaque d'appui (130) vient en contact avec l'élément de compensation (110) lors du fonctionnement en support et ne vient pas en contact avec l'élément de compensation lors du fonctionnement en circulation.

2. Pied de support (100) selon la revendication 1, dans lequel l'élément d'amortissement est agencé directement entre l'élément de compensation (110) et la plaque d'appui (130).

3. Pied de support (100) selon l'une des revendications précédentes, dans lequel l'élément d'amortissement est réalisé et/ou agencé de telle façon que l'élément de compensation (110) est écarté de la plaque d'appui (130) lors du fonctionnement en circulation.

4. Pied de support (100) selon l'une des revendications précédentes, dans lequel un espace de réception (115, 135) est réalisé entre l'élément de compensation (110) et la plaque d'appui (130), espace dans lequel est agencé l'élément d'amortissement, et
dans lequel l'espace de réception (115, 135) est réalisé quant à sa forme et à son volume de telle façon que l'élément d'amortissement peut être reçu entièrement dans celui-ci lors du fonctionnement en support.

5. Pied de support (100) selon l'une des revendications précédentes, dans lequel l'élément d'amortissement est réalisé et/ou agencé de telle façon que l'apparition de bruits de claquement n'est empêchée que si l'élément de compensation (110) et la plaque d'appui (130) se trouvent dans une position neutre l'un par rapport à l'autre.

6. Pied de support (100) selon l'une des revendications précédentes, dans lequel l'élément d'amortissement est réalisé en un matériau capable de récupération et/ou élastique et en particulier en un corps d'amortissement (150) à forme stable réalisé en un matériau à base de caoutchouc.

7. Pied de support (100a, 100b) selon l'une des revendications précédentes, dans lequel l'élément d'amortissement comprend un système à ressort (160a, 160b) qui entraîne judicieusement lors du fonctionnement en circulation un écartement prévu entre l'élément de compensation (110a, 110b) et la plaque d'appui (130a, 130b) afin d'empêcher les bruits de claquement qui se produisent lors du fonctionnement en circulation.

8. Pied de support (100) selon l'une des revendications précédentes, dans lequel l'élément d'amortissement comprend un corps d'amortissement rempli avec un gel.

9. Pied de support selon l'une des revendications précédentes, dans lequel l'élément d'amortissement est relié directement ou indirectement avec l'élément de compensation (110) et/ou avec la plaque d'appui (130), en particulier collé, ce pourquoi cet élément présente de préférence une surface de collage de réalisation correspondante.

10. Pied de support pour une remorque de semi-remorque ou similaire, comprenant un tube de support (200), en particulier un tube de support capable de télescoper, et comprenant un pied de support (100) fixé sur ce tube de support, ledit pied de support (100) étant réalisé selon l'une des revendications précédentes.
